# EUROPÄISCHE PATENTANMELDUNG

(11) **EP 0 967 346 A1**
(43) Veröffentlichungstag der Anmeldung: **29.12.1999**
(21) Anmeldenummer: 98111921.7
(22) Anmeldetag: 27.06.1998
(51) Int. Cl.: E04F 11/18, F16B 7/04

(54) **System zum Fixieren eines Langkörpers in einem Rohr**

(71) Anmelder: Treppenbau Saage GmbH Co.KG, 41334 Nettetal-Leuth (DE)
(72) Erfinder: Vyskozil, Volker, 41334 Nettetal (DE)
(74) Vertreter: König, Reimar, Dr.-Ing.

(57) **Zusammenfassung**

Die Erfindung betrifft ein System zum Fixieren eines Langkörpers (4) in einem Rohr (1), wie es beispielsweise zum Verbinden eines Handlaufs mit den Pfosten einer Spindeltreppe bekannt ist, bei dem ein Verbindungselement (3) in eine in einem Rohr befindliche Einschuböffnung (2) eingesetzt wird und ein Langkörper in die Einschuböffnung mit Verbindungselement eingetrieben und mit Hilfe von am Verbindungselement angeordneten Klemmmitteln (5,6) in der Einschuböffnung fixiert wird.

## Beschreibung

Die Erfindung betrifft ein System zum Fixieren eines Langkörpers in einem Rohr, wie es beispielsweise zum Verbinden eines Handlaufs mit den Pfosten einer Spindeltreppe bekannt ist.

Die einfachste derartige Verbindung stellt die Schweißverbindung dar, bei der der Pfosten (Langkörper) mit seinem Ende seitlich an den Handlauf (Rohr) angesetzt und mit einer Schweißnaht fixiert wird. Der Einsatz von Schweißverbindungen besitzt allerdings den Nachteil, daß qualifizierte Fachkräfte zum Herstellen der Verbindung eingesetzt werden müssen und das Verbinden zeitaufwendig ist, was besonders bei der Vielzahl von für einen Handlauf erforderlichen Schweißverbindungen ein Problem darstellt. Für das Zusammensetzen einer entsprechenden Treppe vor Ort ist diese Art von Verbindung daher wenig geeignet.

Bei einer anderen für Treppengeländer bekannten Verbindungsvariante wird der Pfosten mit einer Halbschale auf den Handlauf aufgeschraubt. Auch diese Verbindung ist aufwendig, sowohl in der Fertigung als auch bei der Montage.

Eine weitere Verbindungsart eines Geländerpfostens mit dem Handlauf besteht darin, daß der Pfosten mit einer an seinem Ende fixierten Hülse auf den Handlauf aufgeschoben wird. Das Aufschieben und Fixieren der Hülse ist mit erheblichen Schwierigkeiten verbunden, da jede Hülse mit dem dazugehörigen Pfosten über die gesamte Länge des Handlaufs bis zu ihrem gewählten Fixierungspunkt geschoben werden muß und zudem die Schwierigkeit besteht, die Hülse an dem vorgesehenen Punkt zu fixieren.

Bei der aus der deutschen Offenlegungsschrift 42 06 471 bekannten Lösung ist der Handlauf in einzelne Teilstücke aufgegliedert, die mit die Pfosten tragenden Kupplungsstücken untereinander verbunden werden. Diese Art der Verbindung weist gegenüber einem durchgehenden Handlauf eine wesentlich geringere Stabilität und zudem einen besonders hohen Herstellungsaufwand auf.

Bei einem aus der deutschen Offenlegungsschrift 43 05 089 bekannten Verfahren zum Herstellen eines Geländers weist der Handlauf Einschuböffnungen auf, in die die Pfosten eingesteckt und anschließend durch Verzinken fixiert werden. In der Praxis hat sich gezeigt, daß die Festigkeit einer derartigen Verbindung häufig zu gering ist und zudem hohe Anforderungen an das Spaltmaß der zu verbindenden Teile gestellt sind, was den Konstruktionsaufwand erhöht. Oft kommt es auch zu Schwierigkeiten bei der Montage, da die Einschuböffnungen zu klein ausfallen und die Pfosten daher nicht ohne weiteres in den Handlauf eingeschoben werden können. In anderen Fällen sind die Einschuböffnungen zu groß, was sich wiederum nachteilig auf die Festigkeit der Verbindung zwischen Pfosten und Handlauf auswirkt.

Davon ausgehend liegt der Erfindung die Aufgabe zugrunde, ein System der eingangs beschriebenen Art zu schaffen, daß die genannten Nachteile vermeidet und insbesondere eine einfache herzustellende und feste Verbindung zwischen einem Langkörper und einem Rohr erlaubt.

Die Aufgabe wird durch den Gegenstand der unabhängigen Ansprüche gelöst, bei dem ein Verbindungselement in eine in einem Rohr befindliche Einschuböffnung eingesetzt wird und ein Langkörper in die Einschuböffnung mit Verbindungselement eingetrieben und mit Hilfe von am Verbindungselement angeordneten Klemmmitteln in der Einschuböffnung fixiert wird.

Eine derartige Verbindung läßt sich auf einfache Weise vor Ort zusammensetzen. Dazu werden die Verbindungselemente, die vorzugsweise als Klemmhülse ausgebildet sind, in die im Rohr vorgesehenen Einschuböffnungen eingesetzt. Die Einschuböffnungen bedürfen keiner besonderen Paßgenauigkeit und sind daher ohne großen Aufwand in das Rohr einzubringen. Der Langkörper wird im Rohr fixiert, in dem er in den Stopfen eingetrieben wird, wobei die vorzugsweise als Klemmzähne ausgebildeten Klemmmittel für eine sichere Fixierung des Langkörpers im Rohr sorgen. Auch das Verzinken einer solchen Verbindung ist problemlos, da das beispielsweise bei Gewindeverbindungen erforderliche Nacharbeiten entfällt.

Gegenüber der bekannten Hülsenverbindung besteht ferner der Vorteil, daß die Bauteile getrennt zum Montageort transportiert werden können. Die Erfindung wird nachfolgend anhand eines in der Zeichnung dargestellten Ausführungsbeispiels des näheren erläutert.

In der Zeichnung zeigen:

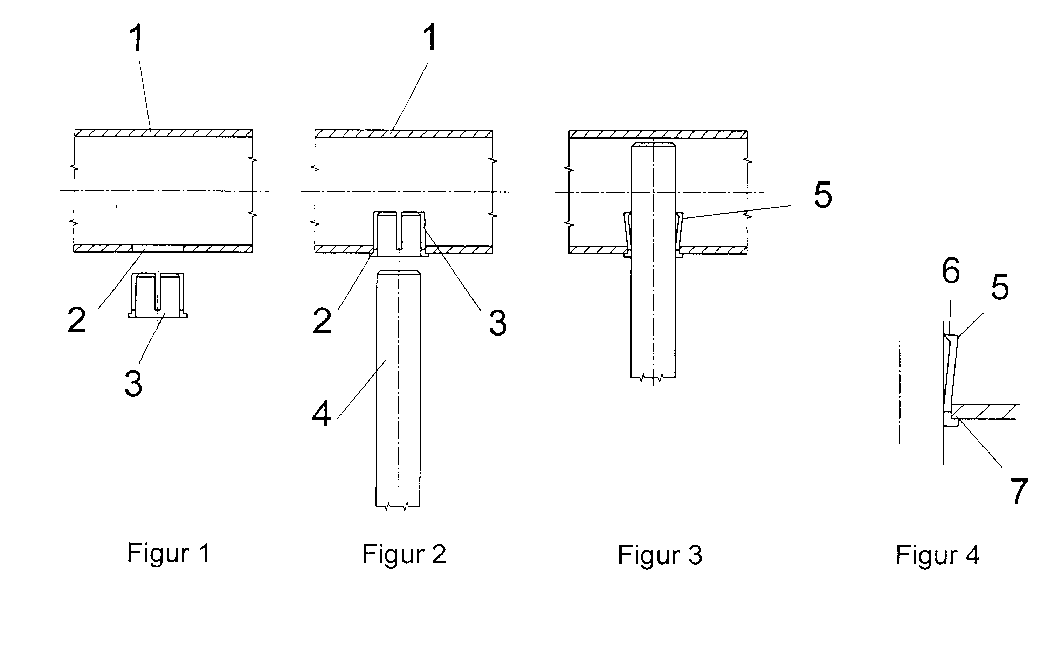

- Fig. 1: einen Handlauf mit Einschuböffnung und Klemmhülse;
- Fig. 2: den Handlauf der Fig. 1 mit eingesetzter Klemmhülse und angesetztem Pfosten;
- Fig. 3: den Handlauf der Fig. 1 und 2 mit eingeschlagenem Pfosten;
- Fig. 4: eine Detailansicht des Klemmmittels der Klemmhülse der Fig. 1 bis 3.

Der Handlauf 1 eines Geländers weist eine Vielzahl von Einschuböffnungen 2 auf. Zum Herstellen der erfindungsgemäßen Verbindung wird eine Klemmhülse 3 in die Einschuböffnung 2 des Handlaufs 1 eingeschoben. Ein Pfosten 4 wird an die Öffnung der Klemmhülse 3 angesetzt und in die Klemmhülse 3 und damit in die Einschuböffnung 2 des Handlaufs 1 eingeschlagen. Der Pfosten 4 fährt dabei an Klemmfingern 5 mit Klemmzähnen 6 entlang, wobei die Klemmhülse 3 in Vortriebsrichtung durch eine Umlaufkante 7 an der Außenkante der Einschuböffnung 2 arretiert ist. Die Klemmzähne 6 sind so ausgestaltet, daß der Pfosten 4 entgegen der Eintriebsrichtung fixiert ist. Da sich die Haltefinger 5 beim Eintreiben des Pfostens 4 aus dem Umfang der Klemmhülse heraus nach außen verbiegen, ist auch die Klemmhülse 3 nach dem Eintreiben des Pfostens 4 an der Innenseite der Einschuböffnung 2 des Handlaufs 1 fixiert und damit gegen Herausrutschen entgegen der Eintriebsrichtung gesichert. Bei einer anderen Ausführungsform der Klemmhülse besitzt diese Rastzähne, die an der Innenkante der Einschuböffnung anliegen und die Klemmhülse gegen Herausrutschen entgegen der Eintriebsrichtung sichern.

## Patentansprüche

1. System zum Fixieren eines Langkörpers in einem Rohr, mit einem Langkörper (4) und einem Rohr (1) mit einer Einschuböffnung (2), gekennzeichnet durch ein in der Einschuböffnung (2) angeordnetes Verbindungselement (3) mit Klemmmitteln (5,6) zum Fixieren des Langkörpers (4) in der Einschuböffnung (2) des Rohres (1).

2. System gemäß Anspruch 1, dadurch gekennzeichnet, daß das Verbindungselement (3) als Klemmhülse ausgebildet ist.

3. System nach Anspruch 1 oder 2, dadurch gekennzeichnet, daß das Verbindungselement (3) Klemmmittel in Form von Haltefingern (5) aufweist, die an ihren Enden Klemmzähne (6) zum Fixieren des Langkörpers (4) aufweisen.

4. System nach einem der vorhergehenden Ansprüche, dadurch gekennzeichnet, daß die Verbindungselemente (3) eine Umlaufkante (7) zur Anlage an der Außenkante der Einschuböffnung (2) aufweisen und die Haltefinger (5) so angeordnet sind, daß sie durch Eintreiben des Langkörpers (4) aus dem Umfang der Verbindungselemente (3) herausgebogen werden.

5. System nach einem der vorhergehenden Ansprüche, dadurch gekennzeichnet, daß die Verbindungselemente (3) Rastzähne zur Anlage an der Innenkante der Einschuböffnung aufweisen.

6. Verfahren zum Verbinden eines Langkörpers mit einem Rohr, bei dem ein Langkörper (4) in eine auf dem Umfang eines Rohres (1) angeordnete Einschuböffnung (2) eingesetzt wird, dadurch gekennzeichnet, daß Verbindungselemente (3) in die Einschuböffnung (2) eingesetzt und der Langkörper in die Einschuböffnung (2) mit den Verbindungselementen (3) eingetrieben wird.
